# EUROPEAN PATENT SPECIFICATION

(11) **EP 0 426 908 B1**
(45) Date of publication and mention of the grant of the patent: **09.03.1994**
(21) Application number: 89202855.6
(22) Date of filing: 09.11.1989
(51) Int. Cl.: H02G 3/08, H02G 3/04

(54) **Cable duct system and cable duct junction**
Leitungskanalsysteme und Leitungskanalverbindung
Système de canalisation pour câble et jonction de canalisation pour câble

(43) Date of publication of application: 15.05.1991
(73) Proprietor: HOLDING TECHNISCH HANDELS- EN ADVIESBURO VAN ENGELAND B.V., 7611 KA Aadorp (NL)
(72) Inventor: Van Engeland, Wil, NL-7608 GA Almelo (NL)
(74) Representative: Schumann, Bernard Herman Johan

(56) References cited:
- WO-A-86/02685
- DE-B- 1 246 847

## Description

The present invention relates to a cable duct system having at least three cable ducts which come together in a cable duct junction.

In modern applications a cable duct system is used for guiding cables to and between a number of workplaces in an open space, on the one hand for the transmission of information and on the other hand for the transmission of electrical current.

The invention has for its object to provide a cable duct system wherein the cable ducts for information cables and for current cables are not only mutually separated but are also not mutually interchangeable, while during arranging and removal particularly of information cables which lie in different cable ducts and thereby pass through the cable duct junction, plugs attached to these cables do not require temporary removal. The removal of plugs from information cables in particular is not only time-consuming and entails a high risk of erroneous refitting, it is often forbidden by manufacturers. This object is achieved with the cable duct system according to the invention which comprises at least three cable ducts, each comprising
a bearing skeleton with duct shells releasably attached thereto each of which forms with a bearing skeleton portion a cable compartment, which cable ducts are connected to a cable duct junction, comprising a junction core having for each connected cable duct a partition which blocks wholly or partially the passage of a number of cable duct compartments, and
shells releasably attached to the junction core whereby at least two channel systems are created which mutually connect the open passages of corresponding cable compartments of connected cable ducts.

According to a first embodiment the partition is provided with at least one connecting member which protrudes into a blocked cable compartment so that for example current cables are only situated in the cable ducts and end at the position of the connecting member of the junction core. It is particularly favourable if the connecting members protruding into corresponding blocked cable compartments are mutually coupled whereby the number of connecting wires crossing the junction core is restricted to an optimal minimum.

Separate current cables in the cable ducts can be dispensed with if more preferably a cable rail arranged in the skeleton is coupled to the connecting member. Voltage can now be tapped at any desired location via the relevant compartment of the contact rail and fed outward by means of a connecting cable or by means of a junction box.

In its most complex form the cable duct system according to the invention comprises a cable duct junction to which are connected five cable ducts. In this case the junction core is provided with five partitions wherein the one channel system connects four open passages with each other and the other channel system connects five open passages with each other. In preference each cable duct then has four compartments placed pair-wise diametrically wherein more preferably two mutually diametrically situated compartments are located in a lying plane. These lying compartments are preferably used for the electrical connections so that the lying compartments are closed off by the respective partitions.

Another aspect of the invention relates to the cable duct junction itself, whereof a number of important inventive construction parts whereof are described above.

Mentioned and other features of the cable duct system and the cable duct junction according to the invention are further elucidated hereafter by way of example and with reference to two embodiments, whereby reference is made to the annexed drawing.

In the drawing:
figure 1 shows a perspective, partly broken away view of a first embodiment of the cable duct system according to the invention;
figure 2 shows a section through a cable duct from figure 1;
figure 3 shows on a larger scale a perspective, exploded view of detail III from figure 1;
figure 4 is a perspective bottom view of the junction core from figure 3;
figure 5 is a view corresponding with figure 1 of a second embodiment; and
figure 6 shows a section of a cable duct from figure 5.

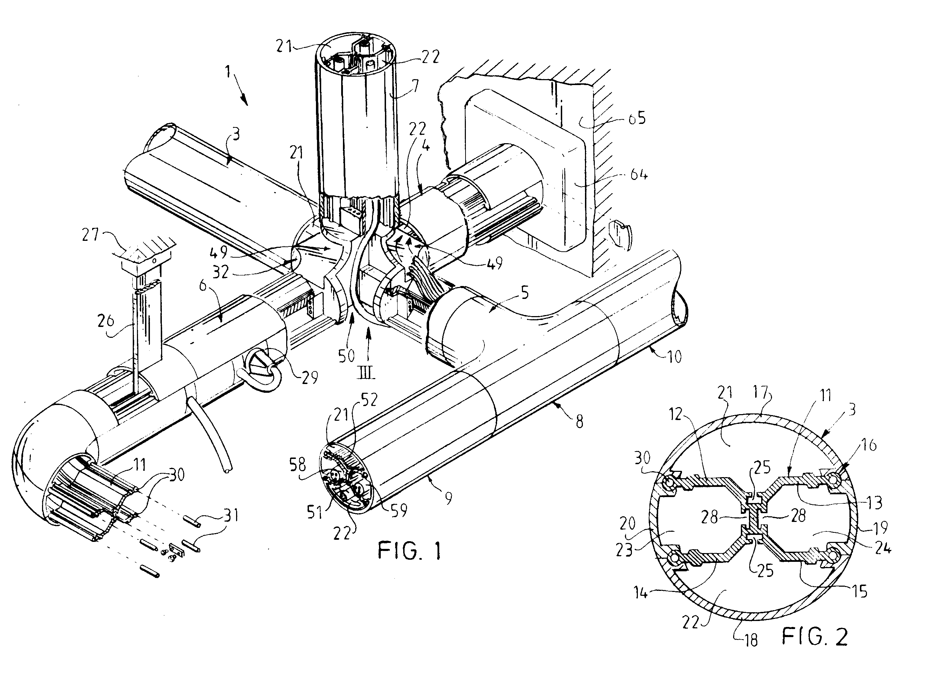

Figure 1 shows the cable duct system 1 according to the invention, which comprises four cable ducts 3-6 situated in a horizontal plane and a cable duct 7 standing perpendicular to this plane. The cable duct 5 is further connected to a T-cable junction 8 to which are connected two cable ducts 9 and 10.

As is shown in figure 2 each cable duct comprises a bearing skeleton 11 with four bearing skeleton arms 12-15 to which duct shells are releasably attached by means of known snap closures. Four compartments are thus defined, namely an upper compartment 21, a bottom compartment 22 and two lying compartments 23 and 24.

In the compartments 21 and 22 the bearing skeleton is provided with a longitudinal groove 25 in which is fixed a bearing arm 26 that is attached to a ceiling 27.

The grooves 28 of the bearing skeleton which are located in the compartments 23 and 24 are intended for attachment therein of, for example, a junction box 29.

Provisions can further be arranged in the compartments, in particular in compartment 22, for auxiliary means such as halogen or fluorescent lighting, loud-speakers, telephone connections and the like.

The bearing skeleton 11 can be constructed from bearing skeleton parts which are coupled with pins 31 for insertion into bore holes 30 in the skeleton arm.

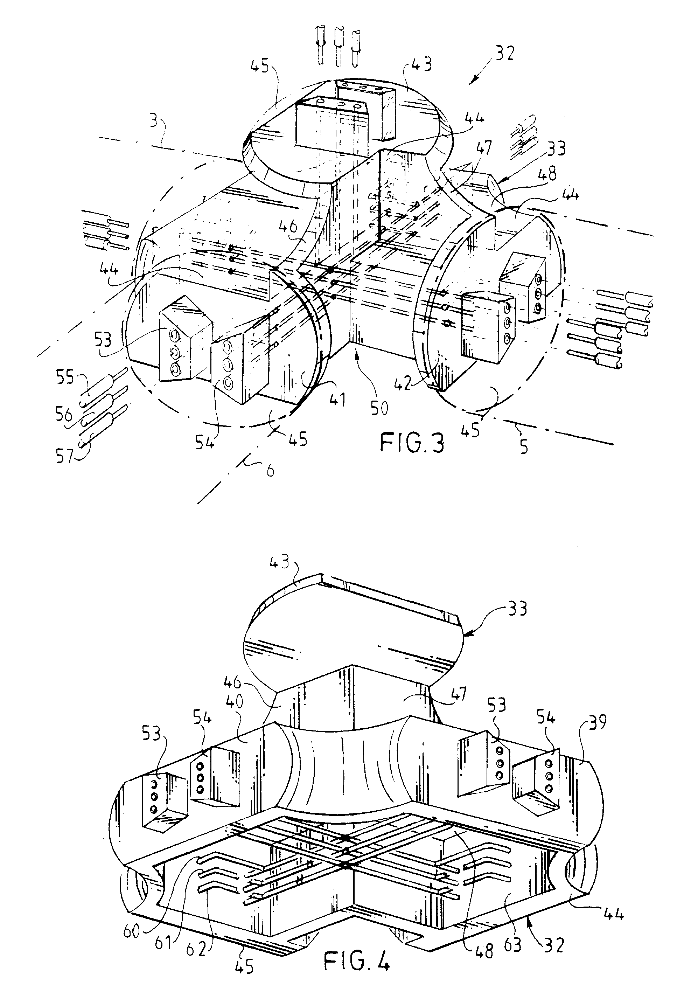

The five cable ducts 3-7 are connected to a cable duct junction 32 which is discussed in more detail with reference to figures 3 and 4.

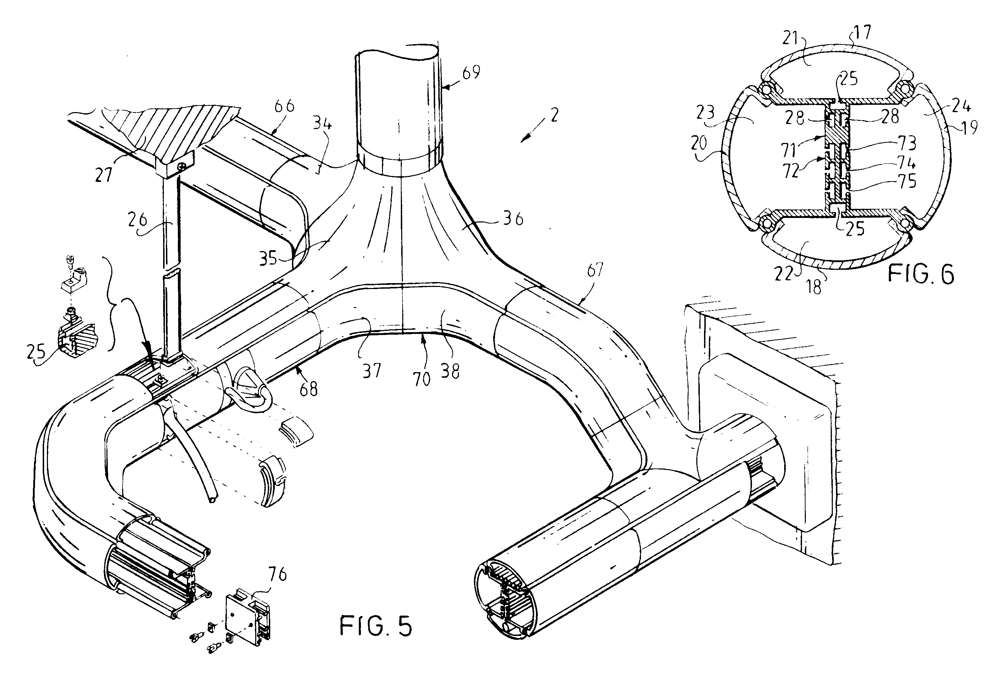

The cable duct junction comprises a junction core, for example manufactured by injection moulding, and closing core shells 34-38 detachable from the junction core (shown in figure 5).

The junction core 33 is provided for each cable duct 3-7 with a partition 39-43.

These partitions block the entire passage for the compartments 23 and 24, partially block the passage 44 for the compartment 21 and leave open the passage 45 for the compartment 22 of each cable duct.

The passages 44 join a channel system 49 formed by side walls 46 and 47, a base 48 and core shells, which system mutually connects the cable compartments 21 of all cable ducts 3-7.

In similar manner the passages 45 join a channel system 50 which mutually connects all compartments 22.

It is noted that with the side walls 46, 47 and the partitions 39-43 a barrier is formed between both channel systems 49 and 50. This means that an information cable 51 which is situated in the bottom compartment 22 of the cable duct 9 via the cable ducts 5 and 8 and the cable duct junction 32 can only enter the compartment 22 of the vertical cable duct 7, whereby this compartment and the channel system 49 are accessible from outside by temporary removal of the relevant shells. The same applies for information cables 52 which are located in compartment 21.

The partitions 39-43 are each provided with two connecting members 53 and 54 placed diametrically opposite one another which extend into the blocked cable compartments 23 and 24 respectively and in which plugs 55-57 of current cables 58-59 are inserted.

The connecting wires 60-62 of the connecting members 53 and 54 are embedded and mutually connected in an internal space 63 of the junction core 33.

Via a wall socket 64 the cable duct system 1 can be connected via the cable duct 4 and fed through a wall 65.

Figures 5 and 6 show another cable duct system 2 according to the invention. In this case four cable ducts 66-69 join a cable duct junction 70 the internal construction whereof substantially corresponds to that of the cable duct junction 32 which is shown in figure 1.

In this case the bearing skeleton 71 comprises a skeleton body 72 in which, in addition to the previously described longitudinal grooves 28, are also arranged contact rails 73-75 for the electrical connections.

Bearing skeleton parts are mutually coupled by means of a coupling piece 76 which also electrically interconnects the contact rails.

It is finally noted that for the mutual connection of six cable ducts it is preferred, for example in figure 1, to use an additional cable duct junction 32, for instance in a reversed form, instead of the T-cable junction.

## Claims

1. Cable duct system (1), comprising at least three cable ducts (3-7), each duct comprising
a bearing skeleton (11) having duct shells (34-38) releasably attached thereto each of which forms with a bearing skeleton part (12-15) a cable compartment (21-24), said cable ducts (3-7) being connected to a cable duct junction (8), comprising a junction core (33) having for each connected cable duct (3-7) a partition (39-43) which wholly or partially blocks the passage (44,45) of a number of cable duct compartments (21-24), and
shells (34-38) releasably attached to the junction core (33) whereby at least two channel systems (49,50) are created which mutually connect the open passages (44,45) of corresponding cable compartments (21-24) of connected cable ducts (3-7).

2. Cable duct system (1) as claimed in claim 1, wherein a partition (39-43) is provided with at least one connecting member (53,54) which protrudes into a blocked cable compartment (21-24).

3. Cable duct system (1) as claimed in claim 2, wherein the connecting members (53,54) which protrude into corresponding blocked cable compartments (23,24) are mutually coupled.

4. Cable duct system (1) as claimed in claim 2 or 3, wherein the connecting member (53,54) is intended for a voltage supply.

5. Cable duct system (1) as claimed in claims 2-4, wherein a cable rail (58,59) arranged in the skeleton is coupled to the connecting member (53,54).

6. Cable duct system as claimed in claims 1-5, wherein each cable duct (3-7) has four compartments (21-24) placed pair-wise diametrically.

7. Cable duct system (1) as claimed in claim 6, wherein two mutually diametrically situated cable compartments (21,22; 23,24) are located in a horizontal plane.

8. Cable duct system (1) as claimed in claim 7, wherein the horizontally lying compartments (23,24) are closed off by the respective partitions (39-43).

## Patentansprüche

1. Leitungskanalsystem (1) mit wenigstens drei Leitungskanälen (3 - 7), von denen jeder Kanal umfaßt:
- ein Lagergerüst (11) mit lösbar daran befestigten Kanalschalen (34 - 38), von denen jede mit einem Abschnitt (12 - 15) des Lagergerüstes einen Leitungsschacht (21 - 24) bildet, wobei die Leitungskanäle (3 - 7) mit einer Leitungskanalverbindung (8) verbunden sind, die einen Verbindungskern (33) umfaßt, der für jeden angeschlossenen Leitungskanal (3 - 7) eine Trennung (39 - 43) aufweist, die den Durchgang (44, 45) einer Anzahl von Leitungskanalschächten (21 - 24) vollständig oder teilweise blockiert, und
- Schalen (34 - 38), die abnehmbar an dem Verbindungskern (33) befestigt sind, wobei wenigstens zwei Kanalsysteme (49, 50) erzeugt werden, die gegenseitig die offenen Durchgänge (44, 45) entsprechender Kabelschächte (21 - 24) miteinander verbundener Leitungskanäle (3 - 7) verbinden.

2. Leitungskanalsystem (1) nach Anspruch 1, dadurch gekennzeichnet, daß eine Trennung (39 - 43) vorgesehen ist, mit wenigstens einem Anschlußteil (53, 54), das in einen blockierten Leitungsschacht (21 - 24) hineinragt.

3. Leitungskanalsystem (1) nach Anspruch 2, dadurch gekennzeichnet, daß die Verbindungsteile (53, 54), die in entsprechende blockierte Leitungsschächte (23, 24) hineinragen, gegenseitig bzw. miteinander gekoppelt sind.

4. Leitungskanalsystem (1) nach Anspruch 2 oder 3, dadurch gekennzeichnet, daß das Anschluß- bzw. verbindungsteil (53, 54) als Spannungsversorgung vorgesehen ist.

5. Leitungskanalsystem (1) nach Anspruch 2 - 4, dadurch gekennzeichnet, daß eine in dem Gerüst angeordnete Leitungsschiene (58, 59) mit dem Anschlußteil (53, 54) gekoppelt ist.

6. Leitungskanalsystem (1) nach Anspruch 1 - 5, dadurch gekennnzeichnet, daß jeder Leitungskanal (3 - 7) vier Schächte (21 - 24) aufweist, die paarweise diametral angeordnet sind.

7. Leitungskanalsystem (1) nach Anspruch 6, dadurch gekennzeichnet, daß zwei zueinander diametral angeordnete Leitungsschächte (21, 22; 23, 24) in einer horizontalen Ebene angeordnet sind.

8. Leitungskanalsystem (1) nach Anspruch 7, dadurch gekennzeichnet, daß die horizontal angeordneten Schächte (23, 24) mit Hilfe der entsprechenden Trennungen (39 - 43) abgeschlossen sind.

## Revendications

1. Ensemble (1) à canalisations pour câbles, comprenant au moins trois canalisations (3 à 7) pour câbles, chaque canalisation comprenant
un squelette (11) de support ayant des enveloppes (34 à 38) de canalisations fixées de façon amovible au squelette, chacune formant, avec une partie (12 à 15) de squelette de support, un compartiment (21 à 24) pour câbles, les canalisations (3 à 7) pour câbles étant connectées à une jonction (8) de canalisations qui comprend un noyau (33) de jonction ayant, pour chaque canalisation connectée (3 à 7), une cloison (39 à 43) qui ferme totalement ou partiellement le passage (44, 45) d'un certain nombre de compartiments (21 à 24) de canalisations pour câbles, et
des enveloppes (34 à 38) fixées de façon amovible au noyau de jonction (33) de manière que au moins deux ensembles à canal (49, 50) soient formés et raccordent mutuellement les passages ouverts (44, 45) des compartiments correspondants (21 à 24) pour câbles des canalisations raccordées (3 à 7).

2. Ensemble (1) à canalisations pour câbles selon la revendication 1, dans lequel une cloison (39 à 43) comporte au moins un organe de connexion (53, 54) qui dépasse dans un compartiment (21 à 24) qui est fermé.

3. Ensemble (1) à canalisations pour câbles selon la revendication 2, dans lequel les organes de connexion (53, 54) qui dépassent dans les compartiments correspondants fermés (23, 24) sont couplés mutuellement.

4. Ensemble (1) à canalisations pour câbles selon la revendication 2 ou 3, dans lequel l'organe de raccordement (53, 54) est destiné à une alimentation en tension.

5. Ensemble (1) à canalisations pour câbles selon les revendications 2 à 4, dans lequel un rail (58, 59) à câble placé dans le squelette est couplé à l'organe de connexion (53, 54).

6. Ensemble (1) à canalisations pour câbles selon les revendications 1 à 5, dans lequel chaque canalisation (3 à 7) pour câbles possède quatre compartiments (21 à 24) disposés diamétralement par paires.

7. Ensemble (1) à canalisations pour câbles selon la revendication 6, dans lequel deux compartiments pour câbles (21, 22 ; 23, 24) disposés mutuellement en position diamétrale sont placés dans un plan horizontal.

8. Ensemble (1) à canalisations pour câbles selon la revendication 7, dans lequel les compartiments disposés horizontalement (23, 24) sont fermés par les cloisons respectives (39 à 43).
